# EUROPEAN PATENT APPLICATION

(11) **EP 4 814 291 A1**
(43) Date of publication of application: **30.09.2026**
(21) Application number: 25193068.1
(22) Date of filing: 31.07.2025
(51) Int. Cl.: F03D 1/06

(54) **METHOD FOR MANUFACTURING ROOT SECTION OF WIND TURBINE BLADE, ROOT SECTION, WIND TURBINE BLADE, AND WIND TURBINE**

(30) Priority: 27.03.2025 CN 202510375844
(71) Applicant: Envision Energy Technology Pte Ltd., 079903 Singapore (SG)
(72) Inventor: SKOVSGAARD, Simon Peter Hald, 079903 Singapore (SG); GIROLOMINI, Giancarlo, 079903 Singapore (SG); ZHANG, Xiangyang, 079903 Singapore (SG)
(74) Representative: Balder IP Law, S.L.

(57) **Abstract**

The present disclosure relates to dry fibre-fabric inlays for being embedded in a shell structure of a wind turbine blade and a method for manufacturing the dry fibre-fabric inlay. The method includes arranging two or more bushings and one or more dry fibre-fabric inlays alternately between the bushings, and consolidating the bushings and the dry fibre-fabric inlays together. The present disclosure also relates to a wind turbine rotor blade including a plurality of the dry fibre-fabric inlays, and to methods of manufacturing the blade.

## Description

### TECHNICAL FIELD

The present disclosure relates to an inlay for being embedded in a shell structure of a wind turbine blade and a method for manufacturing said inlay. The present disclosure also relates to a wind turbine rotor blade including a plurality of said inlays, and to methods of manufacturing said blade.

### BACKGROUND

Wind is an increasingly popular source of renewable and clean energy causing limited pollution. Wind turbine blades are carefully designed to maximize efficiency and especially off-shore wind turbine blades exceed 80 or even 100 meters in length. This increases the weight and costs of the components thereof, and particularly the size and weight of the wind turbine blades has increased.

A wind turbine is traditionally constructed of a tower with a hub or nacelle sitting on top of the tower. Inside the hub is the motor of the wind turbine, and the wind turbine blades are connected to the hub.

Wind turbine blades are typically made from a fibre-reinforced polymer material and are usually manufactured using two moulds. The fibre-reinforced polymer material is placed and then consolidated, into two wind turbine blade shells, that are then assembled into a wind turbine blade.

The root region of the wind turbine blade, where the blade connects to the hub of the wind turbine, typically has a circular cross section. The circular end face of a rotor blade root is usually connected or fastened to a matching circular metal flange on the turbine hub by means of bolts or threaded rods. It is important that this connection between the wind turbine blade and the hub of a wind turbine can transfer and withstand heavy dynamic forces for considerable amount of time. A typical root region of a wind turbine blade includes layers of fibre material forming an outer layer and an inner layer with bushings for fastening the bolts or threaded rods of the hub between the layers of fibre material.

As the size of the wind turbine blades increases, so does the weight of the wind turbine blade and the outer root diameter of the wind turbine blade. This increases the requirements of the strength or bearing capabilities of the connection between the wind turbine blade and the nacelle or hub of the wind turbine, resulting in the need for increased amount of reinforcement materials and the total number of main bolts distributed along the circumference of the root end.

Traditionally a separately manufactured stiff pultruded profiles are placed in between each pair of adjacent bushings, whereby the bushings are mutually separated by the stiff pultruded profiles, arranged between the two layers of fibre material and then consolidated.

EP3697603 discloses various cross-sectional profiles of the dog bone-shaped profiles arranged between the root bushings, and a spacing is formed between the side surfaces of the profiles and the outer surface of the adjacent bushings. In these embodiments, the dog bone-shaped profile may be formed by a single piece or multiple sub-pieces.

However, this method has a vulnerability, as the bonding between the pre-fabricated stiff pultruded profile and the surrounding fibre material is limited, thus providing a week interface compared to the strength of the surrounding fibre material. This week interface, between the bushings and the separately manufactured stiff profiles, creates a weakness in the material of the root section of the wind turbine blade, with the risks of debonding, causing cracks in the root section of the wind turbine blade.

WO2023/139017 discloses a method for manufacturing a fibre material element for embedment in between bushings in a shell structure of a wind turbine rotor blade. The element is produced by arranging a fibre material and a binding agent on a mould plate, in between two movable bushings, where one or both of the bushings may be pushed against the fibre material for compacting and forming the fibre material, that is then at least partly hardened into a pre-form, that is stiff or hard enough for keeping its shape for transferring from the first mould to the blade shell mould and placing in the mould between the bushing in the production of a wind turbine blade shell.

Neither of these prior arts solves the derived weakness of the bonding between the bushings and the surrounding material, while simultaneously allowing for a simple and flexible manufacturing method, where the design of the root section of the wind turbine blade may be altered without the need for major changes in production equipment's and procedures.

The separate operation of fabrication of any kind of a pre-form to be inserted between bushings in the root section of the wind turbine blade, is an additional operation in the manufacturing process, increasing complexity and cost. The pre-fabricated stiff pre-forms will have to be formed and pre-treated, such that they are stiff enough to enable transfer from the fabrication mould to the blade shell mould for placement between bushings. Furthermore, the pre-fabricated pre-forms will have to be handled with uttermost care, as any unwanted impurities on the surface of the pre-fabricated pre-forms or any dents or other changes to the surface of the pre-fabricated pre-form will interfere with the bonding and the strength of said bonding.

Finally, as the pre-fabricated stiff pre-forms are pre-fabricated, there are limited possibility of amending them, either individually or in smaller groups. This results in a lack of flexibility, as all the bushings will be separated with the exact same embedded pre-fabricated stiff pre-forms, such that the whole circumference of the root section of the wind turbine blade will have the same characteristics, and it will also inhibit changes in blade-design, as the whole of root section would have to be changed out.

Overall, there is a want for a solution that provides a stronger root section of a wind turbine blade, especially in the strength of the section of the wind turbine blade including the root bushings, while simultaneously offering a more simple, reliable production method with increased flexibility of the design of the root section of the wind turbine blade The strength of the section of the wind turbine blade including the root bushings has a direct influence on the size of diameter needed for the root section of a wind turbine blade and a stronger root bushings section will enable smaller root bolt circle diameter for large rotor blades.

### SUMMARY

One objective of the present disclosure is to provide a method for manufacturing a root section or a part of a root section, a semi-manufactured root section or a part of a root section, a wind turbine blade shell or a wind turbine blade that overcomes the above-mentioned problems of the prior art, or at least provides an alternative solution.

One objective of the present disclosure is to provide a method for manufacturing a root section or a part of a root section, a semi-manufactured root section or a part of a root section, a wind turbine blade shell or a wind turbine blade that allows for a stronger connection between the bushings and the surrounding fibre-fabric material.

One objective of the present disclosure is to provide a method for manufacturing a root section or a part of a root section, a semi-manufactured root section or a part of a root section, a wind turbine blade shell or a wind turbine blade that allows for an easier lay-up and manufacturing of the blade root reinforcements.

One objective of the present disclosure is achieved by a method for manufacturing a root section or a part of a root section of a wind turbine blade shell, the method including the operations of:
a. arranging two or more bushings intended for connecting a root section of a wind turbine blade directly or indirectly to a hub of a wind turbine in a predefined pattern;
b. alternately arranging one or more dry fibre-fabric inlays between each pair of adjacent bushings; and
c. consolidating the bushings and the dry fibre-fabric inlays together by an infusion process.

The method provided by the present disclosure provides a simple and effective way of producing a root section or a part of a root section of a wind turbine blade shell, resulting in a more homogenous structure in which the interface between the bushings and the fibre-fabric material between the bushings is stronger than the interface between the bushings and the fibre-fabric material between the bushings in prior art.

The inventors of the present disclosure have discovered that the uniform structure of the root section of a root section of a wind turbine blade achieved by co-infusing all the root section components together in one operation, results in a more complex fracture surface. The connection between the dry fibre-fabric inlays of the present disclosure and the bushings surface, does not result in the same straight bonding lines as the bonding between a pre-fabricated pultruded profile and a bushing, as the as the bonding line between the parts will be irregular, resulting in more complex fracture structure and therefore stronger bonding, while on the other hand, the straight surface of a pre-fabricated profiles will provide a straight fracture surface, resulting in the formation of long straight cracks along the bonding line. The complex facture surface provided by the present disclosure results in limited expansion of cracks, as the irregular surface inhibits the formation of long, straight cracks and results in a stronger bonding.

In some embodiments of the present, a method for manufacturing a root section or a part of a root section of a wind turbine blade shell is provided, where the dry fibre-fabric inlays have been folded into shape before they are arranged between the bushings and consolidated with together the bushings by an infusion process

By cutting off the separate operation of pre-fabrication of pre-forms to be inserted between bushings in the root section of the wind turbine blade, the present disclosure provides a simpler and less expensive manufacturing process. The pre-fabricated stiff pre-forms will have to be formed and pre-treated, such that they are stiff enough to enable transfer from the fabrication mould to the blade shell mould for placement between bushings, while the present disclosure provides a method for manufacturing a root section or a part of a root section of a wind turbine blade shell, where the dry fibre-fabric are arranged between adjacent bushings folded sheets of fibre-fabric.

One objective of the present disclosure is achieved by a semi-manufactured part of a root section of a wind turbine blade shell, including two or more bushings in a predefined pattern with fibre-fabric inlays alternatively arranged between each pair of adjacent bushings, where the two or more bushings and the fibre-fabric inlays have been consolidated by an infusion process.

The semi-manufactured part of a root section of a wind turbine blad shell, provided by the present disclosure includes a more homogenous structure in which the interface between the bushings and the fibre-fabric material between the bushings is stronger than the interface in prior art.

In some embodiments of the present disclosure, a method for manufacturing a root section or a part of a root section of a wind turbine blade shell is provided, where a surface, such as a mould, such as a wind turbine blade shell mould is provided, and the bushings are arranged directly on said surface, followed by alternately arranging the dry fibre-fabric between each pair of adjacent bushings and consolidating the bushings and the dry fibre-fabric inlays together.

In some embodiments of the present disclosure, a method for manufacturing a root section or a part of a root section of a wind turbine blade shell is provided, where a surface, such as a mould, such as a wind turbine blade shell mould is provided, then a layer of fibre fabric is arranged on said surface, thereby constructing a fibre-fabric bedding or underlay for arranging the bushings and the dry fibre-fabric inlays on.

Here the term "a layer of fibre-fabric" is defined as certain amount of fibre-fabric that covers said surface, thereby constructing a separation between said surface and the bushings and the dry fibre-fabric inlays. Here the term "a layer of fibre-fabric" is defined as any suitable amount of fibre-fabric, such as a single sheet of fibre-fabric, such as multiple sheets of fibre-fabric layered on top of each other, creating a multilayered layer of fibre-fabric or such as any other undefined mass of fibre-fabric arranged on the surface.

Here the term "fibre-fabric bedding" as used within the description is defined as any amount of fibre-fabric, where the bushings and the dry fibre-fabric inlays may be arranged on, such as a single sheet of fibre-fabric, such as multiple sheets of fibre-fabric layered on top of each other, creating a multilayered layer of fibre-fabric or such as any other undefined mass of fibre-fabric.

Some embodiments of the present disclosure provide a method for manufacturing a semi-manufactured part of a root section of a wind turbine blade shell including two or more bushings arranged in a predefined pattern on a bedding of a layer of fibre-fabric with fibre-fabric inlays alternatively arranged between each pair of adjacent bushings.

Some embodiments of the present disclosure provide a semi-manufactured part of a root section of a wind turbine blade shell including two or more bushings arranged in a predefined pattern on a bedding of a layer of fibre-fabric with fibre-fabric inlays alternatively arranged between each pair of adjacent bushings, where the two or more bushings, the fibre-fabric inlays and the fibre-fabric bedding have been consolidated together by an infusion process.

In some embodiments of the present disclosure, a method for manufacturing a root section or a part of a root section of a wind turbine blade shell is provided, where a surface, such as a mould, such as a wind turbine blade shell mould, such as a root section of a wind turbine blade shell mould is provided, then a layer of fibre fabric is arranged on said surface, thereby constructing a fibre-fabric bedding, The bushings are arranged on said fibre-fabric bedding, followed by alternately arranging the dry fibre-fabric between each pair of adjacent bushings and consolidating fibre-fabric bedding, the bushings and the dry fibre-fabric inlays together.

In some embodiments of the present disclosure, a method for manufacturing a root section or a part of a root section of a wind turbine blade shell is provided, where a layer of fibre-fabric is arranged on the alternately arranged bushings and fibre-fabric inlays.

Here the term "a layer of fibre-fabric" is defined as certain amount of fibre-fabric arranged on or over the alternately arranged bushings and fibre-fabric inlays. Here the term "a layer of fibre-fabric" is defined as any suitable amount of fibre-fabric, such as a single sheet of fibre-fabric, such as multiple sheets of fibre-fabric layered on top of each other, creating a multilayered layer of fibre-fabric or such as any other undefined mass of fibre-fabric arranged over the alternately arranged bushings and fibre-fabric inlays.

In some embodiments of the present disclosure, a method for manufacturing a root section or a part of a root section of a wind turbine blade shell is provided, where a layer of fibre-fabric is arranged on the alternately arranged bushings and fibre-fabric inlays, thereby creating an overlay of fibre-fabric on or over the alternately arranged bushings and the dry fibre-fabric inlays.

Here the term "fibre-fabric overlay" as used within the description is defined as any amount of fibre-fabric, arranged on top of the interchangeably arranged bushings and dry fibre-fabric inlays, such as a single sheet of fibre-fabric, such as multiple sheets of fibre-fabric layered on top of each other, creating a multilayered layer of fibre-fabric or such as any other undefined mass of fibre-fabric. The term "fibre-fabric overlay" as used within the description may therefore be a thin layer of fibre-fabric or a thick layer of fibre-fabric.

In some embodiments of the present disclosure, a method for manufacturing a root section or a part of a root section of a wind turbine blade shell is provided, where a surface, such as a mould, such as a wind turbine blade shell mould, such as a root section of a wind turbine blade shell mould is provided, then a layer of fibre fabric is arranged on said surface, thereby constructing a fibre-fabric bedding. The bushings are arranged on said fibre-fabric bedding, followed by alternately arranging the dry fibre-fabric between each pair of adjacent bushings, then followed by arranging a layer of fibre-fabric over the alternately arranged bushings and fibre-fabric inlays resting on the fibre-fabric bedding, thereby creating an overlay of fibre fabric at least partly covering the alternately arranged bushings and fibre-fabric inlays, and then consolidating fibre-fabric bedding, the bushings, the dry fibre-fabric inlays and the fibre-fabric overlay together.

Some embodiments of the present disclosure provide a semi-manufactured part of a root section of a wind turbine blade shell including two or more bushings arranged in a predefined pattern with fibre-fabric inlays alternatively arranged between each pair of adjacent bushings, sandwiched between a layer of a fibre-fabric bedding and a fibre-fabric overlay. The two or more bushings, the fibre-fabric inlays, the fibre-fabric bedding and the fibre-fabric overlay have been consolidated together by an infusion process.

Some embodiments of the present disclosure provide a method for manufacturing a root section or a part of a root section of a wind turbine blade shell, where the fibre-fabric material between the bushings and the bushing themselves are consolidated together in one single process. Some other embodiments of the present disclosure provide a method for manufacturing a root section or a part of a root section of a wind turbine blade shell, where the fibre-fabric material between the bushings, the fibre-material under the bushings and the bushing themselves are consolidated together in one single process. Some embodiments of the present disclosure provide a method for manufacturing a root section or a part of a root section of a wind turbine blade shell, where the fibre-fabric material between the bushings, the fibre-fabric material under the bushings, the fibre-fabric material under the bushings and the bushing themselves are consolidated together in one single process.

Some embodiments of the present disclosure provide a method for manufacturing a root section or a part of a root section of a wind turbine blade shell, where the fibre-fabric material between and/or under and/or over the bushings and the bushing themselves are consolidated together in one single process.

The present disclosure thus provides a method for manufacturing a root section or a part of a root section of a wind turbine blade shell, where the fibre-fabric material between and/or under and/or over the bushings and the bushing themselves are consolidated together in one single process, thereby constructing a more uniform and unified consolidated structure with increased strength. Furthermore, the present disclosure provides a flexible method for manufacturing a root section or a part of a root section of a wind turbine blade shell, where the characteristic of the root section or a part of a root section of a wind turbine blade shell being manufactured may be altered, by altering the amount and/or characteristics of the fibre-fabric material utilized in the fibre-fabric inlays and/or the fibre-fabric bedding and/or the fibre-fabric overlay. Some embodiments of the present disclosure provide a flexible method for manufacturing a root section or a part of a root section of a wind turbine blade shell, where characteristic such as load-bearing strength, interface strength between bushing and surrounding fibre-fabric material, distance between bushings, weight, and bulk of the root section or a part of a root section of a wind turbine blade shell being manufactured may be altered, by altering the amount and/or characteristics of the fibre-fabric material utilized in the fibre-fabric inlays and/or the fibre-fabric bedding and/or the fibre-fabric overlay.

Some embodiments of the present disclosure provide a method for manufacturing a root section or a part of a root section of a wind turbine blade shell, including the operation of providing one or more fibre-fabric inlays. Some embodiments of the present disclosure provide a method for manufacturing a root section or a part of a root section of a wind turbine blade shell. The method includes the operation of providing one or more fibre-fabric inlays, and each fibre-fabric inlay is constructed by utilizing one or more, such as two or more sheets of fibre-fabric that are constructed into a layered element with a pre-determined shape and then the layered element is folded into a fibre-fabric inlay with a pre-determined 3-dimensional geometry.

Some other embodiments of the present disclosure provide a method for manufacturing a root section or a part of a root section of a wind turbine blade shell. The method includes the operation of providing one or more fibre-fabric inlays, and each fibre-fabric inlay is constructed by utilizing one or more, such as two or more sheets of fibre-fabric that are constructed into a layered element with a pre-determined shape, and then the layered element is folded into a fibre-fabric inlay with a pre-determined 3-dimensional geometry, utilizing a specific pre-determined folding pattern.

By utilizing different folding patterns, the 3-dimensional geometry of the fibre-fabric inlay acquired may be altered, such as the length of the fibre-fabric inlay acquired and/or the height of the fibre-fabric inlay acquired and/or the width of the fibre-fabric inlay acquired and/or the shape of the fibre-fabric inlay acquired, furthermore by utilizing different folding patterns, physical characteristic such as such as the density of the fibre-fabric inlay acquired may be altered.

Some embodiments of the present disclosure provide a method for manufacturing a root section or a part of a root section of a wind turbine blade shell. The method includes the operation of providing one or more fibre-fabric inlays, and each fibre-fabric inlay is constructed by utilizing one or more, such as two or more sheets of fibre-fabric that are constructed into a layered element with a pre-determined shape. The layered element may be shaped by cutting and/or tapering the one or more, such as two or more sheets of fibre-fabric.

Some embodiments of the present disclosure provide a method for manufacturing a root section or a part of a root section of a wind turbine blade shell. The method includes the operation of providing one or more fibre-fabric inlays, and each fibre-fabric inlay is constructed by utilizing one or more, such as two or more sheets of fibre-fabric that are constructed into a layered element with a pre-determined shape. The shaping of the one or more, such as two or more sheets of fibre-fabric is achieved independently, and each individual fibre-fabric sheet is cut and/or tapered individually.

Some other embodiments of the present disclosure provide a method for manufacturing a root section or a part of a root section of a wind turbine blade shell. The method includes the operation of providing one or more fibre-fabric inlays, and each fibre-fabric inlay is constructed by utilizing one or more, such as two or more sheets of fibre-fabric that are constructed into a layered element with a pre-determined shape. The shaping of the one or more, such as two or more sheets of fibre-fabric is achieved jointly, where one or more, such as wo or more fibre-fabric sheets are cut and/or tapered jointly.

Some other embodiments of the present disclosure provide a method for manufacturing a root section or a part of a root section of a wind turbine blade shell. The method includes the operation of providing one or more fibre-fabric inlays, and each fibre-fabric inlay is constructed by utilizing one or more, such as two or more sheets of fibre-fabric that are constructed into a layered element with a pre-determined shape. The shaping of the one or more, such as two or more sheets of fibre-fabric is achieved by mixture of shaping workings, such as by both shaping individual fibre-fabric sheets by cutting and/or tapering individual sheets of fibre fabric and/or jointly, where one or more, such as two or more fibre-fabric sheets are cut and/or tapered jointly.

Some embodiments of the present disclosure provide a method for manufacturing a root section or a part of a root section of a wind turbine blade shell. The method includes the operation of providing one or more fibre-fabric inlays, and each fibre-fabric inlay is constructed by utilizing a group of one or more, such as two or more sheets of fibre-fabric. The group of one or more, such as two or more sheets of fibre-fabric include at least one or more, such as two sheets of fibre-fabric with different characteristics.

By utilizing sheets with different characteristics, the physical characteristics of fibre-fabric inlays may be designed, either individually for each individual fibre-fabric inlay and/or in groups and/or collectively, thereby providing a highly flexible method for manufacturing a root section or a part of a root section of a wind turbine blade. The physical characteristics of the root section or a part of a root section being manufactured may be easily designed and altered.

Some embodiments of the present disclosure provide a flexible method for manufacturing a root section or a part of a root section of a wind turbine blade, where the characteristics of the root section or a part of a root section being manufactured may be easily designed and altered.

Some embodiments of the present disclosure provide a flexible method for manufacturing a root section or a part of a root section of a wind turbine blade, where the characteristics of the root section or a part of a root section being manufactured may be easily designed and altered, by altering the number of sheets of fibre-fabric utilized for the construction of the fibre-fabric inlays and thereby the number of layers of the constructed fibre-fabric inlays. The number of sheets of fibre-fabric utilized may be altered independently for each independent fibre-fabric inlay utilized for the manufacturing of the root section or the part of the root section of a wind turbine blade, and/or the number of sheets of fibre-fabric utilized may be altered collectively for all the fibre-fabric inlays utilized for the manufacturing of the root section or the part of a root section of a wind turbine blade, and/or the number of sheets of fibre-fabric utilized may be partly altered for part of the fibre-fabric inlays utilized for the manufacturing of the root section or the part of a root section of a wind turbine blade. Any combination of variations of number of sheets of fibre-fabric utilized for the construction of the fibre-fabric inlays and thereby layers within the fibre-fabric inlays may be achieved. The method includes manufacturing a root section or a part of a root section of a wind turbine blade, where all the fibre-fabric inlays utilized include different numbers of number of sheets of fibre-fabric and thereby different numbers of layers; and/or the method includes manufacturing a root section or a part of a root section of a wind turbine blade, where all the fibre-fabric inlays utilized include the same numbers of number of sheets of fibre-fabric and thereby the same numbers of layers, and/or the method includes manufacturing a root section or a part of a root section of a wind turbine blade, where two or more group including one or more fibre-fabric inlays include the same numbers of number of sheets of fibre-fabric and thereby the same numbers of layers are utilized.

Some other embodiments of the present disclosure provide a flexible method for manufacturing a root section or a part of a root section of a wind turbine blade, where the characteristics of the root section or a part of a root section being manufactured can be easily designed and altered, by altering the types and/or characteristic of the sheets of fibre-fabric utilized for the construction of the fibre-fabric inlays, such as by altering individual fibre-fabric inlays utilized for the manufacturing of the root section or the part of a root section of a wind turbine blade by altering the type and/or characteristic of one sheet and/or by altering the type and/or characteristic of more than one sheet and/or by altering the type and/or characteristic of all sheets of fibre-fabric utilized for constructing said one individual fibre-fabric inlay, such as altering a group of more than one individual fibre-fabric inlay utilized for the manufacturing of the root section or the part of a root section of a wind turbine blade by altering the type and/or characteristic of one sheet and/or by altering the type and/or characteristic of more than one sheet and/or by altering the type and/or characteristic of all sheets of fibre-fabric utilized for the manufacturing of said group of more than one individual fibre-fabric inlay, such as altering all the fibre-fabric inlays utilized for the manufacturing of the root section or the part of a root section of a wind turbine blade by altering the type and/or characteristic of one sheet and/or by altering the type and/or characteristic of more than one sheet and/or by altering the type and/or characteristic of all sheets of fibre-fabric utilized for manufacturing all the fibre-fabric inlays utilized.

In some other embodiments, the present disclosure provides a flexible method for manufacturing a root section or a part of a root section of a wind turbine blade, where the characteristics of the root section or a part of a root section being manufactured can be easily designed and altered, by altering the shape of the fibre-fabric inlays. The shape of the fibre-fabric inlays may be altered in different ways, such as independently. The shape of one individual fibre-fabric inlay utilized for the manufacturing of the root section or the part of a root section of a wind turbine blade is altered by altering the cutting applied to the layered fibre-fabric element and/or altering the tapering applied to the layered fibre-fabric element and/or altering the stitching applied to the layered fibre-fabric element, such as partly. The shape of a group of more than one individual fibre-fabric inlay utilized for the manufacturing of the root section or the part of a root section of a wind turbine blade is altered by altering the cutting applied to the layered fibre-fabric elements of the group and/or altering the tapering applied to the layered fibre-fabric elements of the group and/or altering the stitching applied to the layered fibre-fabric elements of the group; such as jointly. The shape of all the fibre-fabric inlays utilized for the manufacturing of the root section or the part of a root section of a wind turbine blade is altered by altering the cutting applied to the layered fibre-fabric elements and/or altering the tapering applied to the layered fibre-fabric elements and/or altering the stitching applied to the layered fibre-fabric elements.

Some embodiments of the present disclosure provide a flexible method for manufacturing a root section or a part of a root section of a wind turbine blade, where the characteristics of the root section or a part of a root section being manufactured can be easily designed and altered by altering the shape of the fibre-fabric inlays by altering the folding, such as by altering the folding pattern utilized for the folding of the layered fibre-fabric elements utilized for the fibre-fabric inlays utilized.

The folding patterns will directly influence the physical characteristics, such as the density and load bearing properties of the constructed fibre-fabric inlays as well as the tree-dimensional geometry, such as the shape and size of the constructed fibre-fabric inlays.

Some embodiments of the present disclosure provide a flexible method for manufacturing a root section or a part of a root section of a wind turbine blade, where the characteristics of the root section or a part of a root section being manufactured can be easily designed and altered, by alternating the folding pattern utilized for the folding of the layered fibre-fabric elements.

Some embodiments of the present disclosure provide a flexible method for manufacturing a root section or a part of a root section of a wind turbine blade, where the characteristics of the root section or a part of a root section being manufactured can be easily designed and altered, by alternating the folding pattern utilized for the folding of the layered fibre-fabric elements. Different variations of alteration are achieved, such as independent variation. One individual fibre-fabric inlay is altered by folding one individual layered fibre-fabric element utilizing a different folding pattern, such as partly; or a group of more than one fibre-fabric inlay is altered by folding a group of more than one layered fibre-fabric elements according to a different pattern, such as jointly; or all the one fibre-fabric inlays are altered by folding them according to a different pattern.

It is understood that any variations and combinations of those flexible alterations may be achieved. The fibre-fabric inlays utilized for the manufacturing of a root section or a part of a root section of a wind turbine blade may be all different or all same and everything therebetween.

Some embodiments of the present disclosure provide a method for manufacturing a semi-manufactured part of a root section of a wind turbine blade shell including two or more bushings in a predefined pattern with fibre-fabric inlays alternatively arranged between each pair of adjacent bushings.

Some embodiments of the present disclosure provide a semi-manufactured part of a root section of a wind turbine blade shell including two or more bushings arranged on a layer of a fibre-fabric bedding in a predefined pattern with fibre-fabric inlays alternatively arranged between each pair of adj acent bushings, and a layer of fibre-fabric overlay over the fibre-fabric inlays and the bushings. The fibre-fabric bedding, the fibre-fabric inlays and the fibre-fabric overlay have been consolidated together by an infusion process.

### BRIEF DESCRIPTION OF THE DRAWINGS

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment need not have all the aspects or advantages shown. An aspect or an advantage described in conjunction with a particular embodiment is not necessarily limited to that embodiment and can be practiced in any other embodiments even if not so illustrated, or if not so explicitly described.

Exemplary embodiments of the present disclosure are described in the figures.
FIG. 1 illustrates a wind turbine;
FIG. 2 illustrates a wind turbine blade shell mould;
FIG. 3 illustrates a wind turbine blade;
FIG. 4 illustrates a root section of a wind turbine blade
FIG. 5 is a picture of a layered fibre-fabric element according to the present disclosure;
FIG. 6A and FIG. 6B are two pictures demonstrating the layered fibre-fabric element and the folding of the layered fibre-fabric element according to the present disclosure;
FIG. 7 is a picture of a consolidated part of a root section of a wind turbine blade shell according to the present disclosure; and
FIG. 8A, FIG. 8B, FIG. 8C, and FIG. 8D illustrate various folding patterns according to the present disclosure.

### DETAILED DESCRIPTION OF THE EMBODIMENTS

Exemplary embodiments will now be described more fully hereinafter with reference to the accompanying drawings. In this regard, the embodiments may have different forms and should not be construed as being limited to the descriptions set forth herein. Accordingly, the embodiments are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular embodiments only and is not intended to be limiting. As used herein, the terms "comprises", "comprising", "includes", and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which the present disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

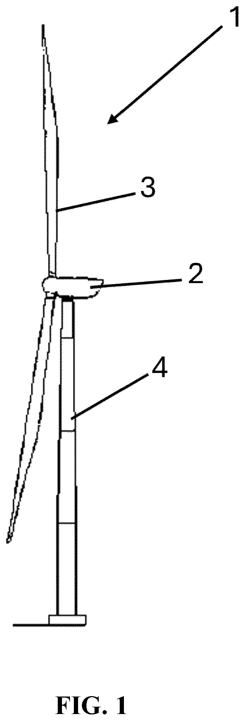

FIG. 1 illustrates a conventional wind turbine 1 including a wind turbine blade 3, a hub 2 and a tower 4. Inside the hub 2 is a motor (not shown).

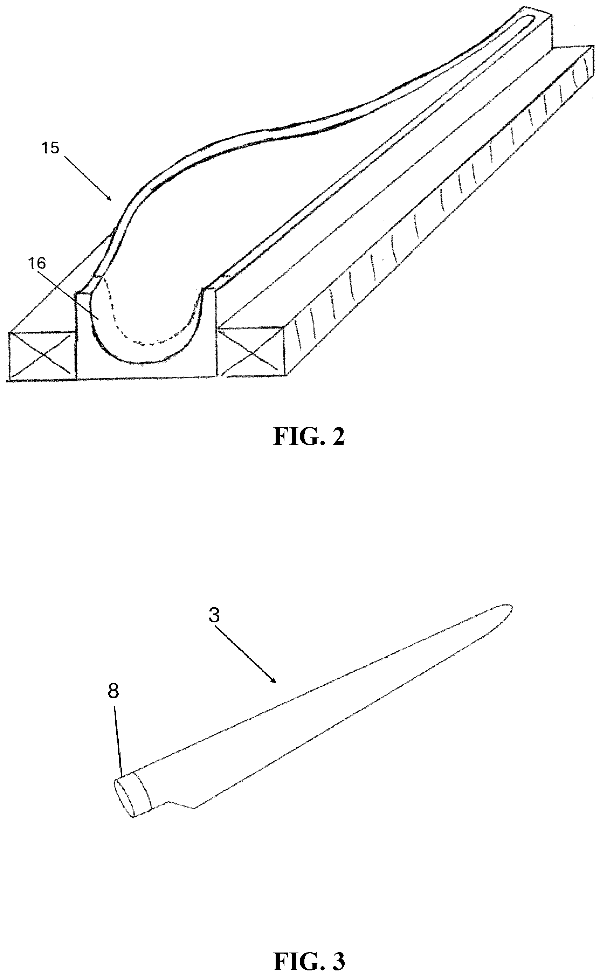

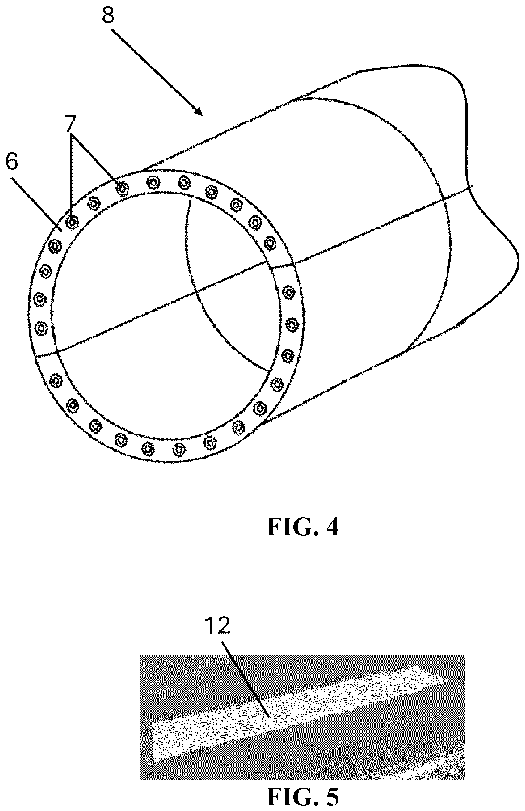

FIG. 2 illustrates a conventional wind turbine blade shell mould 15, including a root section 16 and FIG. 3 demonstrates a conventional wind turbine blade 3 including a root section 8. As demonstrated in FIGS. 3 and 4, the profile of the wind turbine blade varies along the length of the blade, and the root section 8, 16 has a circular cross-section.

FIG. 4 demonstrates a root section 8 of a wind turbine blade 3 shell 5. The end of the root section 8 conventionally has a circular cross-section and includes fibre-material 6 with multiple bushings 7 embedded within the fibre-material 6.

As explained above, the conventional root section of a wind turbine blade is typically constructed of an inner layer and an outer layer, both layers typically including fibre reinforced fabric, typically made of glass fibre and/or carbon fibers and a resin, such as epoxy, polyester or vinyl ester resin. Sandwiched between the two layers are elongated bushings, conventionally arranged on the inner layer separated by pre-manufactured profiles or arranged on the inner layer as a pre-manufactured element including one bushing embedded in a pultruded element.

FIG. 5 is a picture of a layered element 12 of fibre-fabric according to the present disclosure, as shown in FIG. 5, the layered element has been shaped by cutting and/or tapering, as to be suited for being folded in-between bushings 7.

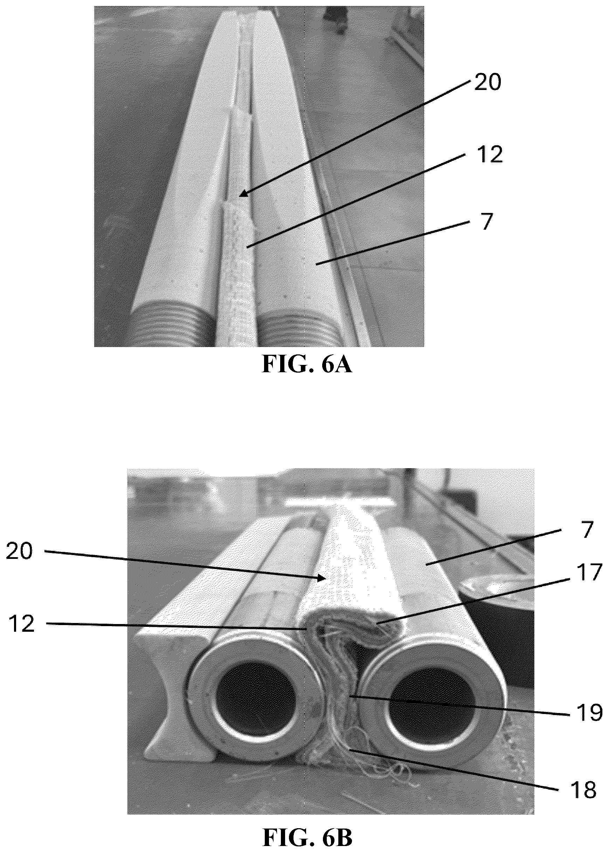

FIG. 6A is a picture of a folded layered element 12, thereby constructing a dry fibre-fabric inlay 20 arranged between two bushings 7, and as the shown in the picture, layered element has been shaped by cutting and/or tapering.

FIG. 6B is a picture of a folded layered element 12, thereby constructing a dry fibre-fabric inlay 20 arranged between two bushings 7, and as shown in the picture the layered element 12 has been folded, for creating a profile including a top-section 17 and bottom-section 18 that are broader than the smaller middle-section 19 for aligning the folded layered element 12 to the profile of the bushings 7.

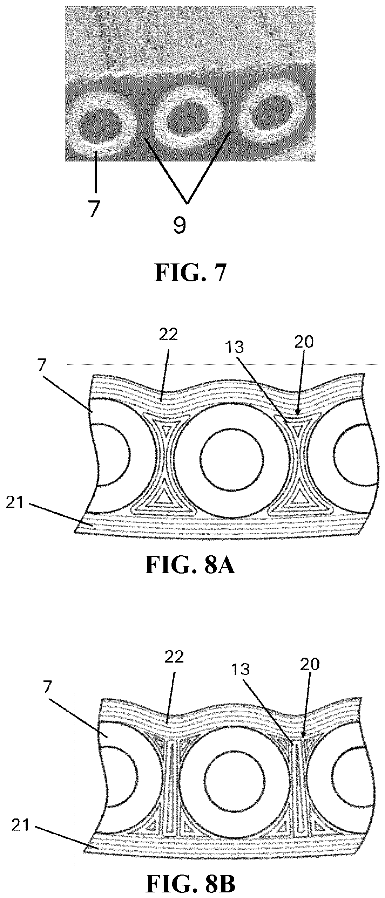

FIG. 7 is a picture of a section of a root section of a wind turbine blade shell according to the present disclosure, demonstrating the seamless structure of the consolidated fibre-fabric material 6 surrounding the embedded bushings 7.

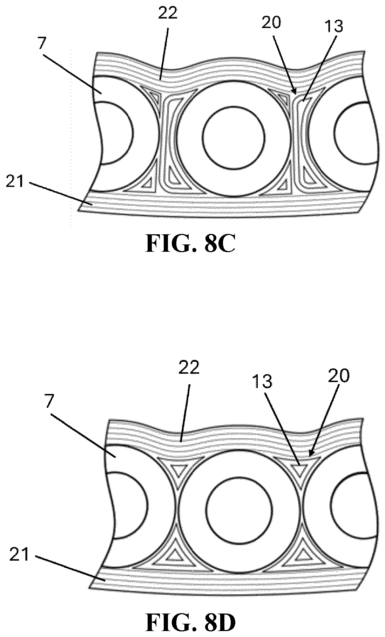

FIGS. 8A to 8D demonstrate different embodiments of the folding patterns 13.

### Experiment 1

An experiment for assessing the shear-out strength of a part of a root section of a wind turbine blade manufactured according to the method provided was performed.

Two samples were produced, a baseline sample with standard glass pultruded profiles between the metal bushing insert, and a corresponding sample produced according to the present disclosure with dry fibre-fabric inlays between the metal bushing inserts.

Apart from the difference in inlays or pre-forms between the metal bushings, both samples followed the same production process, utilizing the same resin and infusion method.

After production of two samples, a 20mm cut-outs were made from each sample for testing. Each test cut-out sample of 20mm thickness included three metal bushings/inserts in the sample.

To compare the static and fatigue strength of the bonding provided, both cut-outs were subjected to a simple shear-out testing in the form of a static shear-out test and a fatigue compression-compression shear-out test.

The two external metal inserts had fixed boundary conditions while the centre metal insert was free to move, and loading could thereby be applied to the centre insert. Load was applied using a universal testing machine. The applied load was measured using a load cell attached to the tensile machine.

The results are shown in Table 1. Cut-out 1, is a cut-out from the baseline sample, produced utilizing standard glass pultruded profiles, while cut-out 2, is a cut-out from the sample produced according to the present disclosure. The actual strength measured is not shown in table 1, as the measured strength of the baseline sample is set as baseline with the value 1.

**Table 1. Shear-out strength measurement**

| Test | Cut-out 1 | Cut-out 2 |
|---|---|---|
| Static shear-out strength factor | 1 | 1.89 |
| Fatigue shear-out strength factor at 2 mil cycles | 1 | 1.26 |

As demonstrated by table 1, the shear-out strength is considerably improved by utilizing the method provided by the present disclosure, and the results clearly demonstrate the superior strength achieved by the present disclosure.

### List of references in the drawings:

| No. | Item |
|---|---|
| 1 | Wind turbine |
| 2 | Hub of wind turbine |
| 3 | Wind turbine blade |
| 4 | Wind turbine tower |
| 5 | Wind turbine blade shell |
| 6 | Fibre material |
| 7 | Bushing |
| 8 | Root section of a wind turbine blade/blade shell |
| 9 | Consolidated fibre-fabric |
| 10 | Semi-manufactured part of a root section of a wind turbine blade shell |
| 11 | Sheet of fibre-fabric |
| 12 | Layered element |
| 13 | Folding pattern |
| 14 | Mould |
| 15 | Wind turbine blade shell mould |
| 16 | Root section of a wind turbine blade shell mould |
| 17 | Top-section of folded layered element/dry fabric inlay |
| 18 | Bottom-section of folded layered element/dry fabric inlay |
| 19 | Middle-section of folded layered element/dry fabric inlay |
| 20 | Dry fibre-fabric inlay |
| 21 | Fibre-fabric bedding |
| 22 | Fibre-fabric overlay |

## Claims

1. A method for manufacturing a root section (8) or a part of a root section (8) of a wind turbine blade shell, comprising:
a. arranging two or more bushings (7) in a predefined pattern, the two or more bushings are configured to connect a root section (8) of a wind turbine blade (3) directly or indirectly to a hub (2) of a wind turbine (1);
b. alternately arranging dry fibre-fabric inlays with the bushings whereby one or more dry fibre-fabric inlays (20) are arranged between each pair of adjacent bushings (7); and
c. consolidating the bushings (7) and the dry fibre-fabric inlays (20) together by an infusion process.

2. The method according to claim 1, wherein the dry fibre-fabric inlays (20) utilized in operation c are folded into a pre-determined shape as to align to the shape of the pair of adjacent bushings (7).

3. The method according to claim 1, wherein operation a comprises:
a.i providing a surface suitable for supporting fibre-fabric and bushings (7) during an infusion process;
a.ii arranging fibre-fabric on the surface, thereby creating a bedding (21) of fibre-fabric on the surface; and
a.iii arranging the two or more bushings (7) intended for connecting a root section (8) of a wind turbine blade (3) directly or indirectly to a hub (2) of a wind turbine (1) in a predefined pattern on the fibre-fabric bedding (21);
wherein operation c comprises consolidating the bushings (7), the dry fibre-fabric inlays (20) and the fibre-fabric bedding (21) together.

4. The method according to claim 3, wherein the surface provided in operation a.i is a mould suitable for manufacturing the root section (8) or a part of the root section (8) of the wind turbine blade shell.

5. The method according to any one of claims 1 to 4, wherein operation b comprises:
b.i providing one or more sheets of fibre-fabric;
b.ii constructing one or more layered element with a pre-determined shape from the one or more sheets of fibre-fabric; and
b.iii folding the one or more layered element with a pre-determined shape thereby constructing one or more fibre-fabric inlays (20) with pre-determined 3-dimensional geometry; and
b.iv alternately arranging the one or more dry fibre-fabric inlays (20) between each pair of adjacent bushings (7).

6. The method according to claim 5, wherein operation b comprises:
b.v arranging an overlay (22) of fibre-fabric over the alternately arranged bushings (7) and fibre-fabric inlays (20); and
wherein operation c comprises consolidating the bushings (7), the dry fibre-fabric inlays (20), and the fibre-fabric overlay (22) together, or consolidating the bushings (7), the dry fibre-fabric inlays (20), the fibre-fabric overlay (22), and the fibre-fabric bedding (21) together.

7. The method according to claim 5 or claim 6, wherein the one or more fibre-fabric inlays (20) with pre-determined 3-dimensional geometry constructed in operation b.iii are folded according to a pre-determined folding pattern.

8. The method according to claim 5, wherein the constructing of a layered fibre-fabric element (12) with a pre-determined shape in operation b.ii comprises cutting and/or tapering the one or more sheets of fibre-fabric.

9. The method according to claim 5, wherein the operation of providing one or more sheets of fibre-fabric in operation b.i comprises selecting a group of at least two fibre-fabric sheets comprising different characteristics.

10. The method according to claim 9, wherein the constructing of a layered fibre-fabric element (12) with a pre-determined shape in operation b.ii comprises stitching the at least two sheets of fibre-fabric together.

11. The method according to claim 3, wherein dry fibre-fabric and/or a fibre-fabric with binder is utilized for the fibre-fabric bedding (21).

12. The method according to claim 6, wherein dry fibre-fabric and/or a fibre-fabric with binder is utilized for the fibre-fabric overlay (22).

13. A root section (8) or a part of a root section (8) of a wind turbine blade (3) manufactured using the method according to any one of claims 1 to 12.

14. A wind turbine blade (3), comprising a root section (8) or a part of a root section (8) of a wind turbine blade shell, wherein the root section (8) or the part of the root section (8) comprises two or more semi-manufactured parts of the root section (8), each semi-manufactured part of the two or more semi-manufactured parts comprises two or more bushings (7), and the two or more bushings (7) are arranged in a predefined pattern and fibre-fabric inlays (20) are alternatively arranged between each pair of adjacent bushings (7) according to the method according to any one of claims 1 to 12.

15. A wind turbine (1), comprising the wind turbine blade (3) according to claim 14.
